# EUROPÄISCHE PATENTSCHRIFT

(11) **EP 2 304 276 B1**
(45) Veröffentlichungstag und Bekanntmachung des Hinweises auf die Patenterteilung: **17.10.2012**
(21) Anmeldenummer: 09768865.9
(22) Anmeldetag: 24.04.2009
(51) Int. Cl.: F16H 63/20

(54) **SCHALTANORDNUNG**
CIRCUIT ARRANGEMENT
DISPOSITIF DE COMMANDE DE PASSAGE DE VITESSES

(30) Priorität: 25.06.2008 DE 102008031815
(43) Veröffentlichungstag der Anmeldung: 06.04.2011
(73) Patentinhaber: GETRAG Getriebe- und Zahnradfabrik Hermann Hagenmeyer GmbH & Cie KG, 74199 Untergruppenbach (DE)
(72) Erfinder: KESEL, Benjamin, 97944 Boxberg (DE); LENZ, Tobias, 74376 Gemmrigheim (DE); IMHOLZ, Heiko, 74189 Weinsberg (DE); MARX, Thomas, 74369 Loechgau (DE)
(74) Vertreter: Witte, Weller & Partner
(86) Internationale Anmeldenummer: PCT/EP2009/002996
(87) Internationale Veröffentlichungsnummer: WO 2009/156016

(56) Entgegenhaltungen:
- EP-A- 0 131 720
- EP-A- 1 538 372
- WO-A-03/040596
- DE-A1- 19 543 645
- DE-A1-102006 000 247
- FR-A- 2 844 570
- US-A- 3 513 717

## Beschreibung

Die vorliegende Erfindung betrifft eine Schaltanordnung für ein Kraftfahrzeuggetriebe, das eine Mehrzahl von Gangstufen aufweist, mit einer in einer Axialrichtung ausgerichteten Schaltwelle und einer Mehrzahl von Schaltgliedern, die dazu ausgelegt sind, an Schaltmuffen anzugreifen, die zum Schalten der Gangstufen axial versetzbar sind, wobei die Schaltwelle zum Anwählen von jeweils einer der Schaltmuffen verdrehbar und zum Schalten der Gangstufen axial versetzbar gelagert ist, wobei die Schaltglieder jeweils eine Mitnehmereinrichtung zur Kopplung mit der Schaltwelle aufweisen, wobei die Schaltwelle eine Koppelanordnung aufweist, die dazu ausgelegt ist, je nach Drehstellung der Schaltwelle jeweils mit einer Mitnehmereinrichtung von einem der Schaltglieder in Eingriff zu treten, um jenes Schaltglied axial mit der Schaltwelle zu koppeln, wie sie aus der DE 10 2006 000 247 bekannt geworden ist.

Das Dokument DE 10 2006 000 247 betrifft eine Gruppenschaltaktuatorik für Doppelkupplungsgetriebe. Die Aktuatorik beinhaltet eine Schaltwelle, die zum Anwählen von Gangstufen gedreht wird und zum Schalten axial verschoben wird (mittels einer Zahnstange). An der Schaltwelle ist eine Koppelanordnung ausgebildet, die eine Koppeleinrichtung mit einer Mehrzahl von drei in axialer Richtung miteinander ausgerichteten Nutabschnitten aufweist. Ferner ist an den Schaltgliedern jeweils eine Mitnehmereinrichtung in Form einer Nase ausgebildet, die in Umfangsrichtung verteilt angeordnet und in axialer Richtung miteinander ausgerichtet sind.

Diese bekannte Aktuatorik ermöglicht das Schalten eines Ganges in einem Teilgetriebe und das gleichzeitige Schalten eines anderen Ganges in dem anderen Teilgetriebe mittels der zentralen Schaltwelle.

Das Dokument DE 10 2004 006 807 betrifft eine Schaltaktuatorik mit einer Schaltwelle, die zum Schalten verdreht wird, wobei die Schaltglieder an jeweiligen Schaltschienen gelagert sind, die axial versetzt sind und über eine Nase an der Schaltwelle angewählt werden.

Ähnliche Aktuatoriken sind auch aus der DE 101 08 881 sowie aus der DE 102 06 561 bekannt. Bei letzterem Dokument ist das gleichzeitige Einlegen mehrerer Gangstufen aus unterschiedlichen Teilgetrieben möglich. Trotzdem sind die Gangstufen gegeneinander verriegelbar.

Das gattungsbildende Dokument EP 1 538 372 A1 offenbart einen Getriebebetätigungsmechanismus mit einer Schaltwelle, die zum Schalten in Längsrichtung und zum Wählen in Drehrichtung bewegbar ist, wobei an der Schaltwelle eine Koppelanordnung angeordnet ist, die dazu ausgelegt ist, je nach Drehstellung der Schaltwelle jeweils mit einer Mitnehmereinrichtung einer Mehrzahl von Schaltgliedern in Eingriff zu treten, um jenes Schaltglied axial mit der Schaltwelle zu koppeln, wobei die Mitnehmereinrichtungen jeweils eine Mehrzahl von wenigstens drei Nasen aufweisen, die in axialer Richtung ausgerichtet sind und es ermöglichen, das zugeordnete Schaltglied und die Schaltwelle in einer Mehrzahl von axialen Relativpositionen miteinander zu koppeln, wobei eine Mehrzahl von Mitnehmereinrichtungen in Umfangsrichtung verteilt um den Umfang der Schaltwelle herum angeordnet ist.

Vor dem obigen Hintergrund ist es eine Aufgabe der Erfindung, eine verbesserte Schaltanordnung für Kraftfahrzeuge anzugeben, die insbesondere einfacher zu fertigen ist, und sich für Getriebe für den Quereinbau eignet.

Die obige Aufgabe wird gelöst durch eine Schaltanordnung für ein Kraftfahrzeuggetriebe gemäß Anspruch 1 das eine Mehrzahl von Gangstufen aufweist, mit einer axial ausgerichteten Schaltwelle und einer Mehrzahl von Schaltgliedern, die dazu ausgelegt sind, an Schaltmuffen anzugreifen, die zum Schalten der Gangstufen axial versetzbar sind, wobei die Schaltwelle zum Anwählen von jeweils einer der Schaltmuffen verdrehbar und zum Schalten der Gangstufen axial versetzbar gelagert ist, wobei die Schaltglieder jeweils eine Mitnehmereinrichtung zur Kopplung mit der Schaltwelle aufweisen, wobei die Schaltwelle eine Koppelanordnung aufweist, die dazu ausgelegt ist, je nach Drehstellung der Schaltwelle jeweils mit einer Mitnehmereinrichtung von einem der Schaltglieder in Eingriff zu treten, um jenes Schaltglied axial mit der Schaltwelle zu koppeln, und wobei die Mitnehmereinrichtungen jeweils eine Mehrzahl von wenigstens drei Nasen aufweisen, die in axialer Richtung ausgerichtet sind und es ermöglichen, das zugeordnete Schaltglied und die Schaltwelle in einer Mehrzahl von axialen Relativpositionen miteinander zu koppeln.

Durch diese Maßnahme ist zum einen eine Schaltwegeinsparung realisierbar, und zwar insbesondere bei Anwendung auf Doppelkupplungsgetriebe. Wenn bei einem solchen Doppelkupplungsgetriebe in einem Teilgetriebe eine Gangstufe eingelegt ist, kann allein durch Verdrehen der Schaltwelle anschließend eine Kopplung zwischen der Koppelanordnung und einer Mitnehmereinrichtung eines anderen Schaltgliedes realisiert werden. Mit anderen Worten ist es nicht notwendig, die Schaltwelle hierbei axial zu versetzen, was zu der erwähnten Schaltwegeinsparung führt.

Ferner weisen die Mitnehmereinrichtungen jeweils eine Mehrzahl von wenigstens drei Nasen auf, so dass die Koppelanordnung, die der Schaltwelle zugeordnet ist, bspw. mit nur einer Nase ausgebildet sein kann. Dies führt zu einer Kosteneinsparung, da die Ausbildung von Nasen bzw. einer Mehrzahl von Nasen an der Schaltwelle generell mit höheren Kosten verbunden ist.

Zudem lässt sich die erfindungsgemäße Schaltanordnung auf Getriebe im Quereinbau anwenden. Moderne Getriebe für den Quereinbau weisen in der Regel zwei parallele Vorgelegewellen auf, so dass manche Schaltglieder axial miteinander ausgerichtet sein können. Bei dieser Ausführungsform kann die Koppelanordnung einfacher ausgebildet werden, indem die Mitnehmereinrichtung in axialer Richtung zu der Koppelanordnung hin verlegt werden. Auch hierbei kann eine Kosteneinsparung erzielt werden, da die Mitnehmereinrichtungen an den Schaltgabeln einfacher zu realisieren sind als die Koppelanordnung an der Schaltwelle.

Die erfindungsgemäße Schaltanordnung weist eine axial ausgerichtete Schaltwelle auf, so dass die Schaltwelle generell parallel zu Wellen des Fahrzeuggetriebes ausgerichtet sein kann. Ferner kommt die Schaltanordnung mit wenigen Bauteilen aus. Denn es ist nicht notwendig, für jedes Schaltglied eine eigene Schaltstange vorzusehen.

Dadurch, dass die Koppelanordnung jeweils nur mit einer Mitnehmereinrichtung eines Schaltgliedes koppelbar ist, kann die Lagerung der Schaltglieder einfach ausgeführt werden. Während eines Schaltvorganges können Schleppwirkungen auf die anderen Schaltglieder vermieden werden. Gegebenenfalls kann sogar auf eine separate Rastung oder Verriegelung der Schaltglieder verzichtet werden.

Die Kopplung der Koppelanordnung mit einer Mitnehmereinrichtung erfolgt in der Regel nur für die Dauer eines Schaltvorganges, so dass auch eine Energiezufuhr in der Regel nur während dieses Schaltvorganges erforderlich ist (um das zugeordnete Schaltglied und die mit diesem Schaltglied gekoppelte Schaltmuffe axial zu bewegen).

Die Schaltglieder können Schaltgabeln oder Schaltschwingen sein.

Vorzugsweise wird die vorliegende Erfindung angewendet auf Stufengetriebe, insbesondere in Stirnradbauweise, wie beispielsweise automatisierte Schaltgetriebe oder Doppelkupplungsgetriebe.

Gemäß der Erfindung weist die Koppelanordnung eine Koppeleinrichtung auf, um die in Umfangsrichtung der Schaltwelle herum wenigstens zwei Mitnehmereinrichtungen verteilt angeordnet sind.

Diese Ausführungsform eignet sich insbesondere für Getriebe, die quer in einem Fahrzeug eingebaut werden.

Dabei ist es erfindungsgemäß vorgesehen, dass die Mitnehmereinrichtungen gleichmäßig um den Umfang der Schaltwelle herum verteilt angeordnet sind.

Dies kann die Ansteuerung der Schaltwelle insbesondere in Drehrichtung vereinfachen.

Ferner ist es bei dieser Ausführungsform vorteilhaft, wenn zwischen wenigstens zwei der Mitnehmereinrichtungen ein Umfangszwischenraum eingerichtet ist.

Durch den Umfangszwischenraum ist eine axiale Verschiebung der Schaltwelle möglich, ohne dabei eines der Schaltglieder in axialer Richtung mitzunehmen. Diese freie Verschiebbarkeit entlang des Umfangszwischenraumes erleichtert ein Einlernen der eingesetzten Sensorik.

Gemäß einer weiteren bevorzugten Ausführungsform sind wenigstens zwei Schaltglieder auf axial gegenüberliegenden Seiten der einen Koppeleinrichtung angeordnet.

Durch diese Maßnahme kann insgesamt eine axial kompakte Schaltanordnung realisiert werden.

Ferner ist es vorteilhaft, wenn die Mitnehmereinrichtungen an Axialstegen ausgebildet sind, die sich in axialer Richtung von den Schaltgliedern erstrecken.

Die Axialstege können dabei als separate Bauteile ausgebildet sein, die mit den Schaltgliedern verbunden werden, bspw. durch Verschrauben, Verschweißen etc.

Generell ist es jedoch auch denkbar, die Axialstege einstückig mit den Schaltgliedern auszubilden.

Ferner ist es vorteilhaft, wenn ein Zahnstangenabschnitt zum axialen Versetzen der Schaltwelle an einem Stegabschnitt ausgebildet ist, der axial mit der Koppeleinrichtung ausgerichtet ist.

Auch durch diese Maßnahme kann die Schaltanordnung in Axialrichtung besonders kompakt ausgebildet werden.

Insgesamt ist es von besonderem Vorteil, wenn die Schaltglieder jeweils einen Lagerabschnitt aufweisen, mittels dessen die Schaltglieder jeweils in axialer Richtung beweglich lagerbar sind, und wenn die Lagerabschnitte von wenigstens zwei Schaltgliedern an einer gemeinsamen Lagerwelle axial versetzt zueinander gelagert sind.

Besonders bevorzugt ist es dabei, wenn die Lagerabschnitte sämtlicher Schaltglieder an einer gemeinsamen Lagerwelle axial versetzt gelagert sind.

Bei dieser Ausführungsform kann insbesondere in radialer Richtung eine kompakte Schaltanordnung erzielt werden.

Insbesondere bei einem Kraftfahrzeuggetriebe für den Einbau in Längsrichtung ist es in der Regel ohnehin so, dass die Schaltpakete, die mittels der Schaltmuffen betätigbar sind, in axialer Richtung betätigbar sind. Die axial versetzte Lagerung der Schaltglieder an einer gemeinsamen Lagerwelle führt somit zu einer Bauraumoptimierung.

Bei einem Kraftfahrzeuggetriebe für den Einbau in Querrichtung ist es bevorzugt, wenn die Schaltanordnung zwei Lagerwellen aufweist, die parallel zueinander angeordnet sind, wobei vorzugsweise an jeder Lagerwelle wenigstens zwei Schaltglieder axial versetzbar gelagert sind.

Hierdurch wird zum einen der konstruktive Aufwand verringert, insbesondere, wenn die Schaltglieder jeweils frei verschieblich an der jeweiligen Lagerwelle gelagert sind. Alternativ ist es jedoch auch denkbar, die Schaltglieder in bestimmten Positionen rastend an der Lagerwelle(n) festzulegen. Von besonderem Vorteil ist es dabei, wenn die Lagerwelle(n) parallel zu der Schaltwelle ausgerichtet ist. Dies vereinfacht die Konstruktion.

Ferner ist es vorteilhaft, wenn die Lagerwelle(n) als von der Schaltwelle separates Bauteil ausgebildet ist. Dies verhindert Schleppwirkungen zwischen der Schaltwelle und den Schaltgliedern. Die Funktionssicherheit kann verbessert werden.

Ferner können die Schaltglieder in ihren jeweiligen Positionen (in der Regel zwei Schaltpositionen und eine dazwischen liegende Neutralposition) mittels einer separaten Rasteinrichtung rastiert werden. Da Schleppwirkungen vermieden werden, ist es jedoch auch denkbar, auf eine separate Rasteinrichtung zu verzichten, so dass die Rastierung ausschließlich über die in den Schaltpaketen in der Regel ohnehin vorhandene Schaltmuffenrastierung erfolgt. Mit anderen Worten werden bei dieser Ausführungsform die Schaltglieder über die Schaltmuffen in ihren jeweiligen Positionen rastend gehalten.

Ferner ist es bevorzugt, wenn die Schaltwelle und die Lagerwelle(n) an wenigstens einem ihrer Enden an einem gemeinsamen Lagerbauteil gelagert sind.

Auf diese Weise kann die Schaltanordnung beispielsweise vormontiert und vorjustiert werden. Ferner ermöglicht das gemeinsame Lagerbauteil, dass die Funktion unabhängig von Toleranzen des Gehäuses des Kraftfahrzeuggetriebes sein kann.

Gemäß einer weiteren bevorzugten Ausführungsform ist es bevorzugt, wenn wenigstens einem der Schaltglieder eine Verriegelungseinrichtung zugeordnet ist, die dazu ausgelegt ist, jenes Schaltglied in axialer Richtung in Abhängigkeit von der Drehstellung der Schaltwelle gegen ein Gehäuse (oder ein gehäusefestes Bauteil) des Kraftfahrzeuggetriebes zu verriegeln.

Obgleich insbesondere bei Verwendung einer separaten Lagerwelle(n) Schleppwirkungen weitgehend ausgeschlossen sind, kann eine solche Verriegelungseinrichtung zusätzliche Sicherheit gegen das unbeabsichtigte Bewegen von Schaltgliedern bieten. Hierdurch kann bspw. das gleichzeitige Einlegen von Gangstufen innerhalb eines Teilgetriebes verhindert werden.

Ferner kann durch eine solche Verriegelungseinrichtung erreicht werden, dass die Position eines nicht an die Schaltwelle gekoppelten Schaltgliedes festlegbar ist. Mit anderen Worten kann auf eine weitere Rastierung in diesem Fall verzichtet werden.

Gemäß einer alternativen Ausführungsform bildet die Schaltwelle die Lagerwelle.

Bei dieser Ausführungsform sind die Lagerabschnitte der Schaltglieder an der Schaltwelle selbst gelagert. Dies führt zu einer weiteren Bauraumoptimierung. Allerdings können sich hierbei Schleppwirkungen ergeben, so dass eine separate Rasteinrichtung und/oder Verriegelungseinrichtung vorteilhaft ist. Generell ist es jedoch auch denkbar, ähnlich wie bei einer separaten Lagerwelle, eine Rastierung ausschließlich über die Rasteinrichtungen (Feder/Stein-Systeme) der Schaltpakete zu realisieren.

Dabei ist es von besonderem Vorteil, wenn die dem Schaltglied zugeordnete Koppeleinrichtung eine Vertiefung in der Schaltwelle ist, und wobei die Mitnehmereinrichtung des Schaltgliedes einen an dem Schaltglied in radialer Richtung beweglichen Stift aufweist, der zur axialen Kopplung in die Vertiefung eingreift und in anderen Drehstellungen der Schaltwelle radial nach außen versetzt ist. Von besonderem Vorteil ist es hierbei, wenn der Stift in den anderen Drehstellungen der Schaltwelle in eine jeweilige Verriegelungsvertiefung des Gehäuses eingreift.Bei dieser Ausführungsform lässt sich die Verriegelungseinrichtung konstruktiv besonders günstig lösen. Zudem ergibt sich eine kompakte Bauweise.

Dabei ist es von besonderem Vorteil, wenn der radial beweglich gelagerte Stift in radialer Richtung nach innen vorgespannt ist.

Hierdurch wird der Stift, sofern er deckungsgleich mit einer Vertiefung der Schaltwelle ausgerichtet ist, in diese Vertiefung gedrückt und sorgt so für eine axiale Kopplung zwischen Schaltglied und Schaltwelle.

Bei der Ausführungsform, bei der die Schaltwelle die Lagerwelle bildet, kann durch Ausbildung einer entsprechenden Anzahl von Vertiefungen pro Koppeleinrichtung ebenfalls eine Schaltwegeinsparung realisiert werden, genauso wie bei den oben genannten anderen Ausführungsformen, bei denen die Mitnehmereinrichtung eine Mehrzahl von Nasen aufweist.

Insgesamt ist es ferner vorteilhaft, wenn die Koppeleinrichtungen jeweils wenigstens einen Nasenabschnitt aufweisen, wobei die Nasenabschnitte jeweils in radialer Richtung gegenüber der Schaltwelle vorstehen.

Ein derartiger Nasenabschnitt lässt sich vergleichsweise einfach realisieren, indem beispielsweise ein entsprechendes Bauteil an einer vorbereiteten geraden Schaltwelle festgelegt wird (beispielsweise durch Schweißen oder durch sonstige Maßnahmen).

Dabei ist es von besonderem Vorteil, wenn die Mitnehmereinrichtungen jeweils wenigstens zwei Nutabschnitte aufweisen, in den ein zugeordneter Nasenabschnitt der Koppeleinrichtung greifen kann, um das zugeordnete Schaltglied und die Schaltwelle axial zu koppeln.

Alternativ oder kumulativ hierzu ist es auch möglich, dass die Koppeleinrichtungen jeweils wenigstens einen Nutabschnitt aufweisen.

Ein solcher Nutabschnitt kann beispielsweise durch zwei Nasen ausgebildet sein, die in radialer Richtung gegenüber der Schaltwelle vorstehen und axial versetzt sind. Ein solcher Nutabschnitt kann jedoch beispielsweise auch durch eine Vertiefung in der Schaltwelle ausgebildet sein.

Dabei ist es von besonderem Vorteil, wenn die Mitnehmereinrichtungen jeweils wenigstens einen Nasenabschnitt aufweisen, der in einen zugeordneten Nutabschnitt einer Koppeleinrichtung greifen kann, um das zugeordnete Schaltglied und die Schaltwelle axial zu koppeln.

Generell ist es funktional gleichwertig, ob die Koppeleinrichtungen Nasen oder Nuten (und in entsprechender Weise die Mitnehmereinrichtungen Nuten oder Nasen) aufweisen. Die jeweilige Auswahl erfolgt im Einzelfall nach fertigungstechnischen bzw. dynamischen Gesichtspunkten.

Insgesamt ist es jedoch bevorzugt, wenn wenigstens ein Nasenabschnitt oder ein Nutabschnitt eine Mehrzahl von Nasen bzw. Vertiefungen (bzw. Nuten) aufweist, die in axialer Richtung ausgerichtet zueinander sind und es ermöglichen, das zugeordnete Schaltglied und die Schaltwelle in einer Mehrzahl von axialen Relativpositionen miteinander zu koppeln.

Durch diese Maßnahme kann eine Schaltwegersparnis realisiert werden. Dies ist insbesondere von Bedeutung bei Einsatz der erfindungsgemäßen Schaltanordnung in einem Doppelkupplungsgetriebe. In Doppelkupplungsgetrieben können bekanntlich zwei Gangstufen gleichzeitig geschaltet sein, wobei der Leistungsfluss generell nur über eine der zwei Gangstufen erfolgt. Durch überschneidendes Betätigen von eingangsseitigen Reibkupplungen kann der Leistungsfluss zugkraftunterbrechungsfrei von einer geschalteten Gangstufe auf die andere geschaltete Gangstufe übertragen werden.

Bei Ausbildung von mehreren in axialer Richtung miteinander ausgerichteten Nasen bzw. Vertiefungen (Nuten) ist es beispielsweise möglich, die Schaltwelle zunächst mit einem Schaltglied (eines ersten Teilgetriebes) axial zu koppeln und dieses in axialer Richtung zu versetzen. Anschließend muss zur Anwahl einer weiteren Gangstufe (des zweiten Teilgetriebes) lediglich ein Drehvorgang der Schaltwelle erfolgen, um eine andere Koppeleinrichtung mit der Mitnehmereinrichtung des weiteren Schaltgliedes axial zu koppeln und das weitere Schaltglied anschließend axial zu versetzen. Es versteht sich dabei, dass der axiale Hub der Schaltstange dementsprechend größer gewählt wird, so dass der Hub wenigstens drei axialen Schaltpositionen, vorzugsweise wenigstens fünf axialen Schaltpositionen entspricht.

Ferner kann vorgesehen sein, dass sowohl an den Koppeleinrichtungen als auch an den Mitnehmereinrichtungen jeweils eine Mehrzahl von Nasen bzw. Vertiefungen (Nuten) vorgesehen ist, die in axialer Richtung ausgerichtet zueinander sind. Hierdurch kann beispielsweise der Funktionsumfang vergrößert werden, ohne den Hub der Schaltwelle übermäßig zu vergrößern.

Ferner versteht sich, dass bei einer solchen Anordnung nicht nur Einfachschaltungen sondern auch Mehrfachschaltungen möglich sind (beispielsweise einen Schaltvorgang von der zweiten in die dritte oder auch in die 4. oder 5. Gangstufe).

Vorzugsweise ist hierbei ferner der Schaltweg an allen Schaltkupplungspaketen (Synchronisierungen) des Kraftfahrzeuggetriebes gleich groß (oder nahezu gleich groß).

Durch die Schaltwegersparnis kann ferner schneller auf Fehlschaltungen bzw. kurzfristige Änderungen der Schaltvorgaben reagiert werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine Seitenansicht einer ersten Ausführungsform einer nicht zur Erfindungsehörenden Schaltanordnung;
- Fig. 2: eine Abwicklung einer Schaltwelle einer Schaltanordnung gemäß einer weiteren nicht zur Erfindung gehörenden Ausführungsform;
- Fig. 3: eine weitere alternative Ausführungsform einer nicht erfindungsgemäßen Schaltanordnung;
- Fig. 4: eine Abwicklung der Schaltwelle, die in Fig. 3 gezeigt ist;
- Fig. 5: eine weitere alternative Ausführungsform einer nicht erfindungsgemäßen Schaltanordnung;
- Fig. 6: eine weitere alternative Ausführungsform einer nicht erfindungsgemäßen Schaltanordnung;
- Fig. 7: einen Ausschnitt aus einer Abwicklung einer Schaltwelle einer nicht erfindungsgemäßen Schaltanordnung;
- Fig. 8: eine schematische Querschnittsansicht einer weiteren Ausführungsform einer nicht erfindungsgemäßen Schaltanordnung;
- Fig. 9: eine Seitenansicht der Schaltwelle der Schaltanordnung der Fig. 8;
- Fig. 10: eine Seitenansicht einer Ausführungsform einer erfindungsgemäßen Schaltanordnung;
- Fig. 11: eine Teilansicht der Schaltanordnung der Fig. 10 in axialer Richtung;
- Fig. 12: ein Detail der Schalteinrichtung der Figuren 10 und 11 mit Darstellung von Mitnehmereinrichtungen und einer einzelnen Koppeleinrichtung; und
- Fig. 13: eine perspektivische Teilansicht der Schaltanordnung der Figuren 10 bis 12.

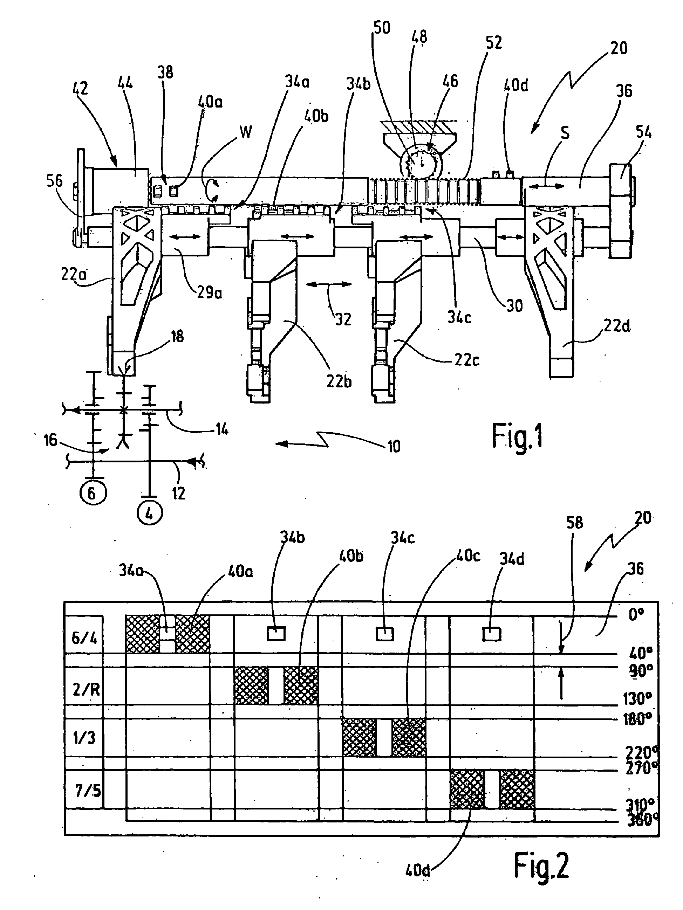

In Fig. 1 ist ein Kraftfahrzeuggetriebe in Form eines Stufengetriebes in Vorgelegebauweise generell mit 10 bezeichnet.

Das Kraftfahrzeuggetriebe 10 ist für den Längs- bzw. Inline-Einbau in einem Kraftfahrzeug ausgelegt und weist eine erste Welle 12 und eine zweite, hierzu parallele Welle 14 auf. An den Wellen 12, 14 sind Radsätze gelagert, die jeweils einer Gangstufe zugeordnet sind und ein Losrad und ein Festrad aufweisen. In Fig. 1 sind in schematischer Form lediglich die Radsätze für die Gangstufen 4 und 6 des Kraftfahrzeuggetriebes 10 dargestellt. Es versteht sich, dass das Kraftfahrzeuggetriebe 10 fünf, sechs, sieben oder mehr Vorwärtsgangstufen haben kann (sowie in der Regel eine Rückwärtsgangstufe).

Zwischen den Radsätzen für die Gangstufen 4 und 6 ist ein Schaltkupplungspaket 16 angeordnet. Eine Schaltmuffe 18 des Paketes 16 ist axial verschiebbar und dazu ausgelegt, entweder das Losrad des Radsatzes für die Gangstufe 6 oder das Losrad des Radsatzes für die Gangstufe 4 formschlüssig mit der zugeordneten Welle (hier die Welle 14) zu verbinden. Die Schaltmuffe 18 des Schaltkupplungspaketes 16 lässt sich mittels einer schematisch angedeuteten Schaltmuffe 18 in axialer Richtung bewegen.

In entsprechender Weise weist das Kraftfahrzeuggetriebe 10 Radsätze für die Gangstufen 2/R, 1/3 sowie 7/5 auf, denen jeweils ein entsprechendes Schaltkupplungspaket 16 zugeordnet ist (in Fig. 1 aus Gründen einer übersichtlicheren Darstellung nicht gezeigt).

Das Kraftfahrzeuggetriebe 10 ist vorzugsweise ein Doppelkupplungsgetriebe mit zwei Teilgetrieben, denen eingangsseitig jeweils eine eigene Reibkupplung zugeordnet ist. Das eine Teilgetriebe beinhaltet die geraden Gangstufen, das andere Teilgetriebe die ungeraden Gangstufen. Die Rückwärtsgangstufe ist einem der zwei Teilgetriebe zugeordnet, im vorliegenden Fall dem Teilgetriebe mit den geraden Gangstufen.

Zur Betätigung der Schaltmuffen 18 der Schaltkupplungspakete 16 des Kraftfahrzeuggetriebes 10 ist eine Schaltanordnung vorgesehen, die in Fig. 1 generell mit 20 bezeichnet ist.

Die Schaltanordnung 20 weist eine Mehrzahl von Schaltgabeln 22 auf, die jeweils einer der Schaltmuffen 18 zugeordnet sind. Zur Unterscheidung der Schaltgabeln 22 sind diese mit Suffixen a, b, c, d versehen.

Die Schaltgabeln 22 weisen jeweils einen Lagerabschnitt 29 auf, mittels dessen die Schaltgabeln 22 an einer gemeinsamen Lagerwelle 30 gelagert sind. Die Lagerwelle 30 erstreckt sich in Axialrichtung 32 des Kraftfahrzeuggetriebes 10, d.h. parallel zu den Wellen 12, 14. Die Schaltgabeln 22 sind in axialer Richtung verteilt an der Lagerwelle 30 gelagert. Ferner sind die Schaltgabeln 22 an der Lagerwelle 30 in axialer Richtung versetzbar, wie es durch entsprechende Pfeile in Fig. 1 angedeutet ist.

Die Schaltgabeln 22 weisen jeweils eine Mitnehmereinrichtung 34 auf. Die Mitnehmereinrichtungen 34 dienen dazu, die Schaltgabeln 22 in axialer Richtung 32 entlang der Lagerwelle 30 zu verschieben.

Die Schaltanordnung 20 weist ferner eine Schaltwelle 36 auf, die separat von der Lagerwelle 30 ausgebildet, jedoch parallel hierzu ausgerichtet ist.

Die Schaltwelle 36 weist eine Koppelanordnung 38 auf, die eine Mehrzahl von Koppeleinrichtungen 40 (mit entsprechenden Suffixen a, b, c, d gekennzeichnet) beinhaltet. Jede Koppeleinrichtung 40 ist einer Mitnehmereinrichtung 34 einer Schaltgabel 22 zugeordnet.

Die Koppeleinrichtungen 40 sind demzufolge in axialer Richtung 32 an der Schaltwelle 36 verteilt angeordnet. Ferner sind die Koppeleinrichtungen 40 in Umfangsrichtung um die Schaltwelle 36 herum verteilt angeordnet.

Auf diese Art und Weise ist, je nach Drehstellung der Schaltwelle 36, jeweils eine Koppeleinrichtung 40 mit der zugeordneten Mitnehmereinrichtung 34 gekoppelt. In Fig. 1 ist dies für die Koppeleinrichtung 40b und die zugeordnete Mitnehmereinrichtung 34b der Schaltgabel 22b gezeigt. Die anderen Mitnehmereinrichtungen 34a, c, d sind von der Schaltwelle 36 entkoppelt. Drehbewegungen der Schaltwelle 36 sind folglich Wählbewegungen W. In entsprechender Weise sind Axialbewegungen der Schaltwelle 36 Schaltbewegungen S, bei denen eine Koppeleinrichtung 40 jeweils eine Mitnehmereinrichtung 34 in axialer Richtung mitnimmt und folglich die zugeordnete Schaltgabel 22 axial versetzt.

Zum Drehen der Schaltwelle 36 ist ein Drehantrieb 42 vorgesehen. Dies kann ein hydraulischer Antrieb sein, ist jedoch im vorliegenden Fall ein elektrischer Motor 44. Für Schaltbewegungen S ist ein Linearantrieb 46 vorgesehen. Auch dieser kann hydraulisch ausgebildet sein, ist jedoch im vorliegenden Fall durch einen elektrischen Motor 48 gebildet, der mit einem Ritzel 50 verbunden ist, das mit einem Zahnstangenabschnitt 52 der Schaltwelle 36 in Eingriff steht.

Der elektrische Motor 44 kann koaxial zu der Schaltwelle 36 angeordnet sein, kann jedoch auch parallel versetzt hierzu sein und die Schaltwelle 36 über einen Radsatz antreiben. Der elektrische Motor 48 kann, wie dargestellt, quer zu der Erstreckung der Schaltwelle 36 angeordnet sein, kann jedoch auch parallel hierzu angeordnet sein. Im letzteren Fall könnte der elektrische Motor 48 über ein Winkelgetriebe mit einem Zahnstangenabschnitt der Schaltwelle 36 verbunden sein.

Die Schaltwelle 36 und die Lagerwelle 30 sind im Bereich ihrer Enden über ein erstes Lagerbauteil 54 bzw. ein zweites Lagerbauteil 56 gelagert. Die Schaltwelle kann an dem Lagerbauteil 56 mittelbar über den Drehantrieb 42 gelagert sein.

Die Schaltanordnung 20 ist als Gruppenschaltaktuatorik ausgebildet und ermöglicht es, jeweils eine Schaltgabel 22 ohne Einfluss auf die anderen Schaltgabeln zu bewegen. Ferner lassen sich die Koppeleinrichtungen 40 in jeder Axialposition der Schaltgabeln 22 von den Mitnehmereinrichtungen 34 entkoppeln, so dass nach dem Einlegen eines Ganges in einem Teilgetriebe (erste Getriebegruppe) zusätzlich eine Gangstufe in dem zweiten Teilgetriebe (zweite Getriebegruppe) eingelegt werden kann. Eine Berührung zwischen der Schaltwelle 36 und den Schaltgabeln 22 und damit eine ungewollte Bewegung von nichtgekoppelten Elementen ist ausgeschlossen.

Die Schaltgabeln 22 können an der Lagerwelle 30 axial frei verschieblich gelagert sein. Die entsprechenden Schaltpositionen (neutral bzw. erste Schaltposition (z.B. Gangstufe 6) und zweite Schaltposition (z.B. Gangstufe 4)) können beispielsweise dadurch festgelegt werden, dass die in dem Schaltkupplungspaket 16 in der Regel ohnehin vorhandene Rastierung (Feder/Stein-Paket) die Schaltmuffe 18 axial fixiert und damit auch das hier in Eingriff stehende Schaltglied 22. Alternativ hierzu ist es natürlich auch möglich, den Eingriffsbereich zwischen den Schaltgabeln 22 und der Lagerwelle 30 mit geeigneten Rastierungen zu versehen. Zusätzlich hierzu ist es generell nicht notwendig, die Schaltgabeln 22 eines Teilgetriebes (bei einem automatisierten Schaltgetriebe des gesamten Getriebes) gegeneinander zu verriegeln. Nichtsdestotrotz kann eine solche Verriegelungseinrichtung zusätzlich vorgesehen sein.

Fig. 2 zeigt eine Schaltwelle einer weiteren Ausführungsform einer erfindungsgemäßen Schaltanordnung 20 in abgewickelter Darstellung. Die Schaltanordnung 20 entspricht hinsichtlich Aufbau und Funktionsweise generell der Schaltanordnung 20 der Fig. 1, wobei die Mitnehmereinrichtungen jeweils nur eine einzelne Nase aufweisen, so dass eine Schaltwegeinsparung nur begrenzt realisierbar ist. Diese kann jedoch auch realisiert werden, indem die Nasen der Mitnehmereinrichtungen 34 jeweils axial von außen an den jeweiligen Koppeleinrichtungen 40 angreifen.

Ferner ist zu erkennen, dass die Schaltwelle in einem Umfangsabschnitt (0° bis 40°) eine erste Koppeleinrichtung 40a aufweist, die aus zwei vorstehenden Nasen besteht, zwischen denen eine Nut eingerichtet ist. In entsprechender Weise ist eine identisch ausgebildete Koppeleinrichtung 40b in einem Umfangsbereich von 90° bis 130° angeordnet, eine dritte Koppeleinrichtung 40c in einem Umfangsbereich von 180° bis 220°, und eine vierte Koppeleinrichtung 40d in einem Umfangsbereich von 270° bis 310°.

Bei der dargestellten Ausführungsform weisen die Schaltglieder 22 jeweils Mitnehmereinrichtungen 34 in Form einer einzelnen Nase auf, die so bemessen ist, dass sie in die Nut zwischen den zwei Nasen einer Koppeleinrichtung 40 passt. Im in Fig. 2 dargestellten Fall ist die Mitnehmereinrichtung 34a mit der Koppeleinrichtung 40a gekoppelt. Die anderen Mitnehmer sind hingegen von ihren zugeordneten Koppeleinrichtungen entkoppelt.

In Fig. 2 ist ferner zu erkennen, dass die Koppeleinrichtungen 40 über den Umfang der Schaltwelle 36 so verteilt sind, dass zwischen den Koppeleinrichtungen 40 jeweils ein Umfangszwischenraum 58 ausgebildet ist (beispielsweise von 40° bis 90°).

Dieser Umfangszwischenraum 58 ist so dimensioniert, dass dann, wenn die Mitnehmereinrichtungen 34a hiermit ausgerichtet sind, die Schaltwelle 36 in axialer Richtung frei bewegt werden kann, ohne mit irgendeiner der Koppeleinrichtungen 40 in Eingriff zu treten. Diese freie Verschiebbarkeit ist zum Einlernen der eingesetzten Sensorik vorteilhaft. Zudem haben die entsprechenden Umfangszwischenräume auch eine positive Auswirkung auf die notwendige Auflösung des Wählantriebs (die Auflösung muss nicht so groß sein).

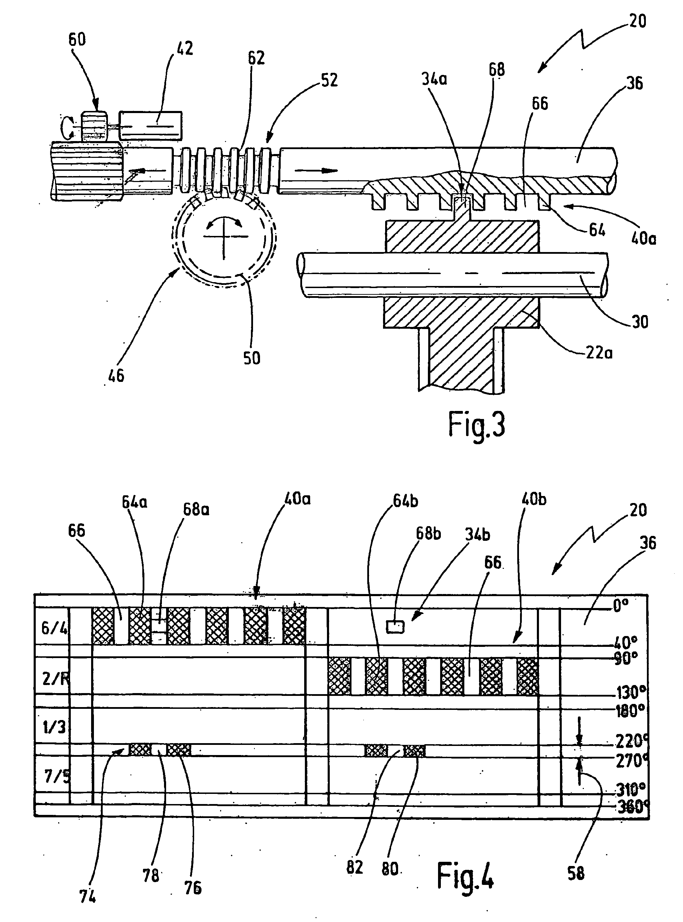

Die nachfolgenden Figuren 3 bis 9 zeigen jeweils alternative Ausführungsformen von Schaltanordnungen 20. Diese Schaltanordnungen 20 entsprechen hinsichtlich Aufbau und Funktion generell den Schaltanordnungen 20 der Fig. 1 und/oder 2. Im Folgenden werden daher lediglich Unterschiede erläutert.

In Fig. 3 ist zunächst gezeigt, dass der Drehantrieb 42 einen elektrischen Motor aufweisen kann, der parallel versetzt zu der Schaltwelle 36 angeordnet ist. Der Drehantrieb 42 kann über einen Radsatz 60 mit der Schaltwelle 36 verbunden sein. Ferner ist gezeigt, dass der Zahnstangenabschnitt 52 eine Mehrzahl von umlaufenden Zahnnuten 62 aufweisen kann, in die das Ritzel 50 unabhängig von der Drehstellung der Schaltwelle 36 greifen kann.

Der Radsatz 60 ist dabei bevorzugt so ausgebildet, dass das der Schaltwelle 36 zugeordnete Rad deutlich breiter ist als das mit dem Antriebsmotor 42 verbundene Rad (was in Fig. 3 nur angedeutet ist). Hierdurch ist es möglich, die Schaltwelle 36 axial zu verschieben, ohne den Wählantrieb 42 mit bewegen zu müssen. Auch andere Arten von stirnseitigen Linearführungen für den Wählantrieb 42 sind möglich.

Bei der Schaltanordnung 20 der Fig. 3 weist jede Koppeleinrichtung 40a nicht nur zwei Nasen auf, zwischen denen eine Nut eingerichtet ist. Vielmehr weisen die Koppeleinrichtungen 40 jeweils eine Mehrzahl von in axialer Richtung versetzt zueinander angeordneten Nasenabschnitten 64 auf, zwischen denen jeweils ein Nutabschnitt 66 ausgebildet ist. Insgesamt sind bei dieser Ausführungsform jeweils fünf Nutabschnitte 66 einer Koppeleinrichtung 40 zugeordnet. Die Mitnehmereinrichtung 34a des Schaltgliedes 22 weist eine einzelne Nase auf, die in jede der fünf Nutabschnitte 66 eingreifen kann. Die Nutabschnitte 66 sind entsprechend dem Abstand der Schaltpositionen voneinander beabstandet. In Fig. 3 greift der Nasenabschnitt 68 beispielsweise in den mittleren Nutabschnitt 66. Angenommen, dies sei die Neutralposition, dann ist es zum Versetzen der Schaltgabel 22 in eine der Schaltpositionen notwendig, diese jeweils um eine Entfernung entsprechend dem Abstand zwischen zwei benachbarten Nutabschnitten 66 zu versetzen.

Durch diese Ausgestaltung der Koppeleinrichtungen 40 kann eine Schaltwegersparnis realisiert werden, wie es anhand Fig. 4 erläutert wird.

Die Darstellung der Fig. 4 basiert beispielsweise auf einem Schaltvorgang, bei dem die Schaltwelle 36 den Nasenabschnitt 68a der Schaltgabel 22a um einen Nutabstand versetzt hat (entsprechend beispielsweise einer Bewegung von einer neutralen in eine erste Schaltposition). Ausgehend hiervon ist es möglich, durch eine reine Drehbewegung der Schaltwelle 36 einen anderen Nasenabschnitt (z.B. 68b) unmittelbar in eine der Nuten 66 der zugeordneten Koppeleinrichtung (z.B. 40b) einzuschieben, ohne dass es zuvor notwendig wäre, die Schaltwelle 36 axial zu versetzen. Die Verwendung von fünf Nuten 66 pro Koppeleinrichtung 40 ermöglicht dabei beliebige Kombinationen von Wähl- und Schaltvorgängen der Schaltanordnung 20.

In Fig. 4 ist ferner eine Parksperrenkoppelanordnung 74 gezeigt. Die Parksperrenkoppelanordnung 74 weist in einem Umfangszwischenraum 58 ein erstes Paar von axial nebeneinander angeordneten Parksperrennasen 76 auf, zwischen denen eine Parksperrennut 78 ausgebildet ist. In entsprechender Weise weist die Parksperrenkoppelanordnung 74 in dem gleichen Umfangszwischenraum 58 ein zweites Paar von Parksperrennasen 80 auf, zwischen denen eine Parksperrennut 82 ausgebildet ist. Die Parksperrennuten 78, 82 sind axial entsprechend dem Abstand von zwei Nasen 68 voneinander beabstandet.

Sofern die Schaltwelle 36 so verdreht wird, dass beispielsweise die Nasen 68a, 68b gleichzeitig in die Parksperrennuten 78, 82 greifen, können zwei dem gleichen Teilgetriebe (oder bei dem automatisierten Schaltgetriebe dem gleichen Getriebe) zugeordnete Gangstufen gleichzeitig geschaltet werden, so dass das Getriebe blockiert und dann eine Parksperrenfunktion realisiert wird.

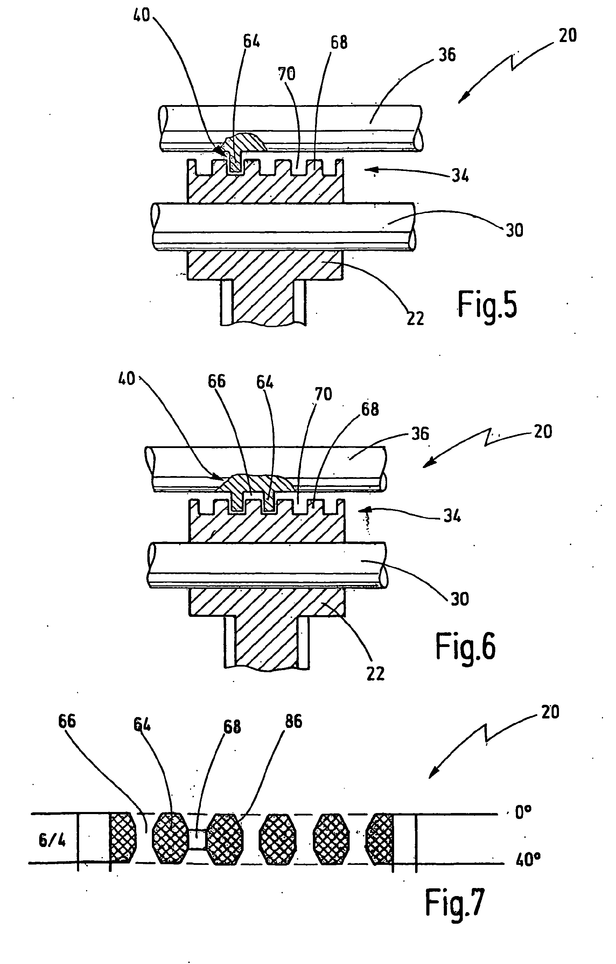

Fig. 5 zeigt eine alternative Ausführungsform einer Schaltanordnung 20, bei der die Koppeleinrichtungen 40 der Schaltwelle 36 jeweils nur einen einzelnen Nasenabschnitt 64 aufweisen. Bei dieser Ausführungsform weisen die Mitnehmereinrichtungen 34 jeweils eine Mehrzahl von Nasenabschnitten 68 und dazwischen ausgebildeten Nuten 70 auf. Die Darstellung der Fig. 5 ist funktional ansonsten identisch zu der Schaltanordnung 20 der Fig. 3 und 4.

In Fig. 6 ist eine weitere alternative Ausführungsform gezeigt, bei der die Mitnehmereinrichtungen 34 jeweils genauso ausgebildet sind wie in Fig. S. Die Koppeleinrichtungen 40 weisen jedoch jeweils zwei Nasenabschnitte 64 auf, zwischen denen ein Nutabschnitt 66 ausgebildet ist. Bei dieser Ausführungsform ist es auch denkbar, anstelle von fünf Nuten 70 in der Mitnehmereinrichtung 34 nur drei Nuten 70 vorzusehen. Dabei ist der gleiche Funktionsumfang erzielbar wie bei der Schaltanordnung 20 der Fig. 3 und 4. Die Darstellung der Fig. 6 entspricht ferner den in Fig. 1 gezeigten Mitnehmer- bzw. Koppeleinrichtungen 34, 40.

In Fig. 7 ist dargestellt, dass die Nasenabschnitte 64 (oder die Nasenabschnitte 68) jeweils mit Einführschrägen 86 ausgebildet sein können, um ein einfacheres Einführen von Nasenabschnitten 68 (bzw. 64) zu ermöglichen.

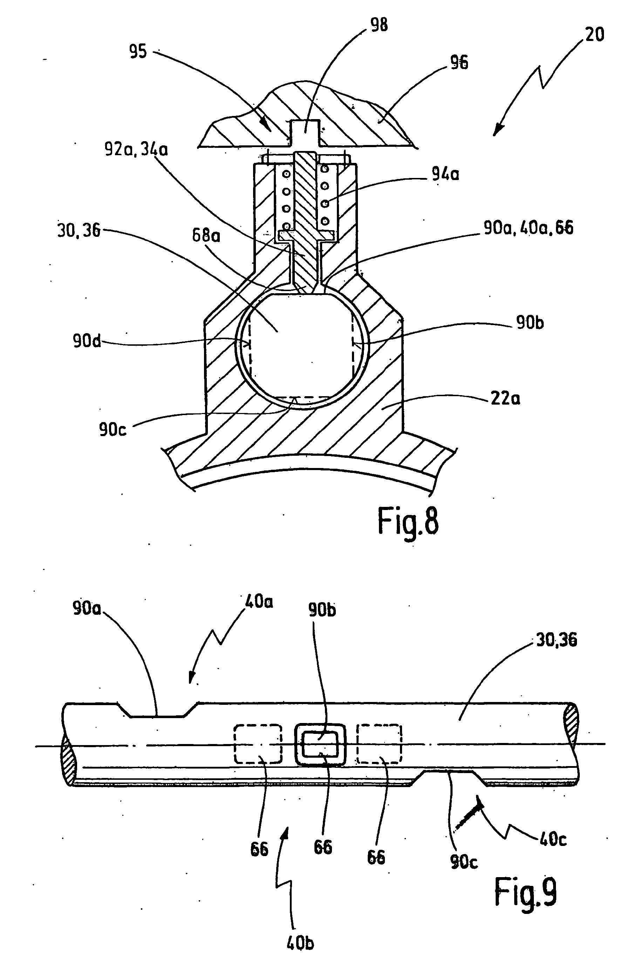

In den Fig. 8 und 9 ist eine weitere alternative Ausführungsform einer Schaltanordnung 20 dargestellt.

Bei der Schaltanordnung 20 bildet die Schaltwelle 36 gleichzeitig die Lagerwelle 30. Mit anderen Worten sind die Schaltgabeln 22 jeweils unmittelbar an der Schaltwelle 36 gelagert. Die Koppeleinrichtungen 40 sind jeweils durch Vertiefungen 90 in der Schaltwelle 36 ausgebildet. Die Mitnehmereinrichtungen 34 sind jeweils durch Stifte 92 gebildet, die an den Schaltgabeln 22 in radialer Richtung beweglich gelagert sind. Genauer gesagt, sind die Stifte 92 mittels einer jeweiligen Feder 94 in radialer Richtung auf die Schaltwelle 36 zu vorgespannt.

Je nach Drehstellung der Schaltwelle 36 greift jeweils ein Stift 92 in eine zugeordnete Vertiefung 90. Der Stift 92 kann ferner Teil einer Verriegelungseinrichtung 95 sein. In Fig. 8 ist ein Gehäuse 96 des Kraftfahrzeuggetriebes dargestellt (oder ein anderer hiermit fest verbundener Abschnitt). Daran ist eine Verriegelungsvertiefung 98 ausgebildet, in die ein radial äußeres Ende des Stiftes 92 greifen kann, und zwar dann, wenn der Stift 92 gegen die Kraft der Feder 94 aus seiner zugeordneten Vertiefung 90 herausgedrängt wird. Dann also, wenn die zugeordnete Schaltgabel 22 nicht angewählt ist, wird die Schaltgabel 22 gegenüber dem Gehäuse 96 verriegelt.

Die Schaltanordnung 20 ist insgesamt kompakt und kann als eine vormontierte Einheit bereitgestellt werden. Die Montage kann je nach Radsatzkonfiguration auch modular erfolgen.

Die Schaltanordnung 20 der Fig. 8 und 9 kann ansonsten hinsichtlich Funktion und Aufbau identisch ausgebildet sein zu den zuvor beschriebenen Schaltanordnungen.

In Fig. 9 ist ferner gezeigt, dass an der Schaltwelle 36 anstelle einer Vertiefung 90 pro Koppeleinrichtung 40 auch eine Mehrzahl von Vertiefungen 66 vorgesehen sein kann. Dies ist in Fig. 9 schematisch für die Koppelrichtung 40b angedeutet. Für diesen Fall kann ebenfalls eine Schaltwegersparnis realisiert werden, wie auch bei den oben genannten Ausführungsformen. In gleicher Weise ist es möglich, einer Mitnehmereinrichtung nicht einen Stift 92 sondern eine Mehrzahl von axial versetzt zueinander angeordneten Stiften 92 zuzuordnen, um einen entsprechenden Funktionsumfang zu realisieren.

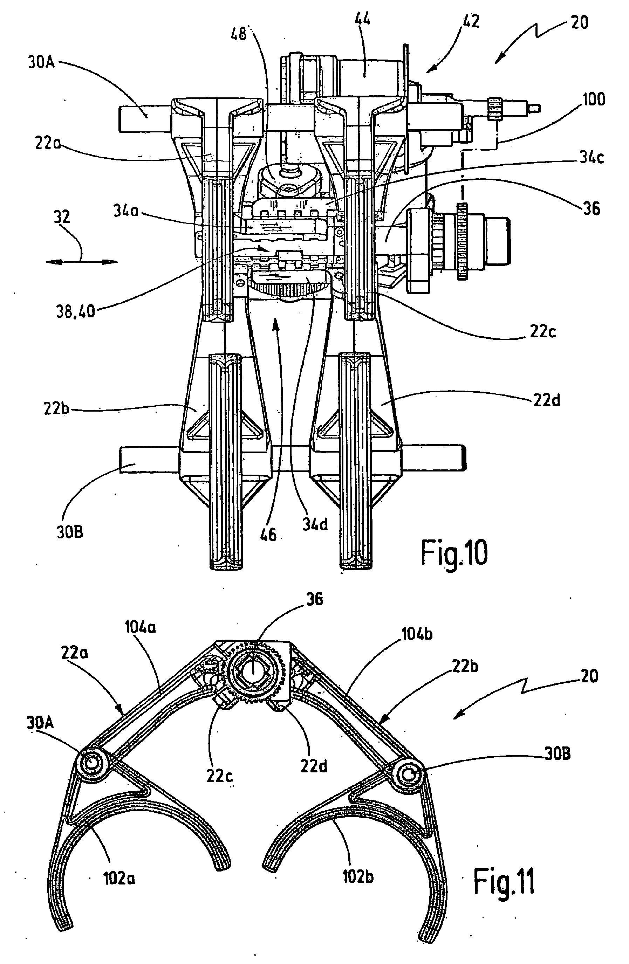

In den Figuren 10 bis 13 ist eine weitere alternative Ausführungsform einer Schaltanordnung 20 gemäß der vorliegenden Erfindung gezeigt.

Die Schaltanordnung 20 ist insbesondere für die Verwendung in Kraftfahrzeuggetrieben ausgelegt, die im Kraftfahrzeug quer eingebaut werden.

Die grundsätzliche Funktionsweise und der grundsätzliche Aufbau der Schaltanordnung 20 der Fig. 10 bis 13 entspricht jenen der Fig. 1 bis 9. Gleiche Elemente sind daher mit gleichen Bezugszeichen bezeichnet. Im Folgenden wird lediglich auf Unterschiede eingegangen.

Die Schaltanordnung 20 weist eine zentrale Schaltwelle 36 auf, die zum Schalten axial verschoben wird (Axialrichtung 32), und die zum Wählen verdreht wird. Ferner weist die Schaltanordnung 20 einen Drehantrieb (Wählantrieb) 42 mit einem elektrischen Motor 44 auf, der axial parallel zu der Schaltwelle 36 ausgerichtet ist. Über ein schematisch angedeutetes Drehantriebsgetriebe 100 ist eine Ausgangswelle des elektrischen Motors 44 getrieblich mit der Schaltwelle 36 gekoppelt. Ferner weist die Schaltanordnung 20 einen Linearantrieb 46 auf, der einen elektrischen Motor 48 beinhaltet. Der elektrische Motor 48 ist in einer Richtung quer zu der Axialrichtung 32 angeordnet.

Die Schaltglieder 22 der Schaltanordnung 20 sind nicht an einer einzelnen Lagerwelle sondern an zwei zueinander parallelen Lagerwellen 30A, 30B gelagert. Genauer gesagt, sind Schaltglieder 22a, 22c axial frei verschieblich an der ersten Lagerwelle 30A gelagert. Die Schaltglieder 22b, 22d sind axial frei verschieblich an der zweiten Lagerwelle 30B gelagert.

An der Schaltwelle 36 ist eine Koppelanordnung 38 in Form einer einzelnen Koppeleinrichtung 40 vorgesehen. Die Koppeleinrichtung 40 weist zwei Nasen und eine dazwischen liegende Nut auf. Das Schaltglied 22a und das Schaltglied 22c sind axial auf gegenüberliegenden Seiten der Koppeleinrichtung 40 angeordnet. In gleicher Weise sind die Schaltglieder 22b, 22d axial auf gegenüberliegenden Seiten der Koppeleinrichtung 40 angeordnet.

Jedem der Schaltglieder 22 ist eine Mitnehmereinrichtung 34 zugeordnet, die jeweils einen sich von dem Schaltglied 22 axial erstreckenden Axialsteg aufweisen. An dem Axialsteg sind eine Vielzahl von Nasen und dazwischen liegenden Nuten angeordnet. Die generelle Kopplung zwischen der Koppeleinrichtung 40 und den Mitnehmereinrichtungen 34 entspricht dem Aufbau der obigen Fig. 6. In gleicher Weise kann die Koppeleinrichtung 40 jedoch auch nur eine einzelne Nase aufweisen (wie in Fig. 5).

Wie es in Fig. 11 gezeigt ist, weist jedes Schaltglied 22 ein Gabelbauteil 102 auf, das in eine jeweilige Schaltmuffe eines Schaltkupplungspaketes 16 greift. Das Gabelbauteil 102 ist jeweils axial frei verschieblich an der zugeordneten Lagerwelle 30A, 30B gelagert. Ferner ist ein Armbauteil 104 starr mit dem jeweiligen Gabelbauteil 102 verbunden. Die Armbauteile 104 erstrecken sich von den Lagerwellen 30A, 30B jeweils hin zu der zentralen Schaltwelle 36. An den Armbauteilen 104 sind die oben erwähnten Axialstege festgelegt.

Die Mitnehmereinrichtungen 34 der Schaltglieder 22 sind in Umfangsrichtung der Schaltwelle 36 um die Koppeleinrichtung 40 herum verteilt angeordnet.

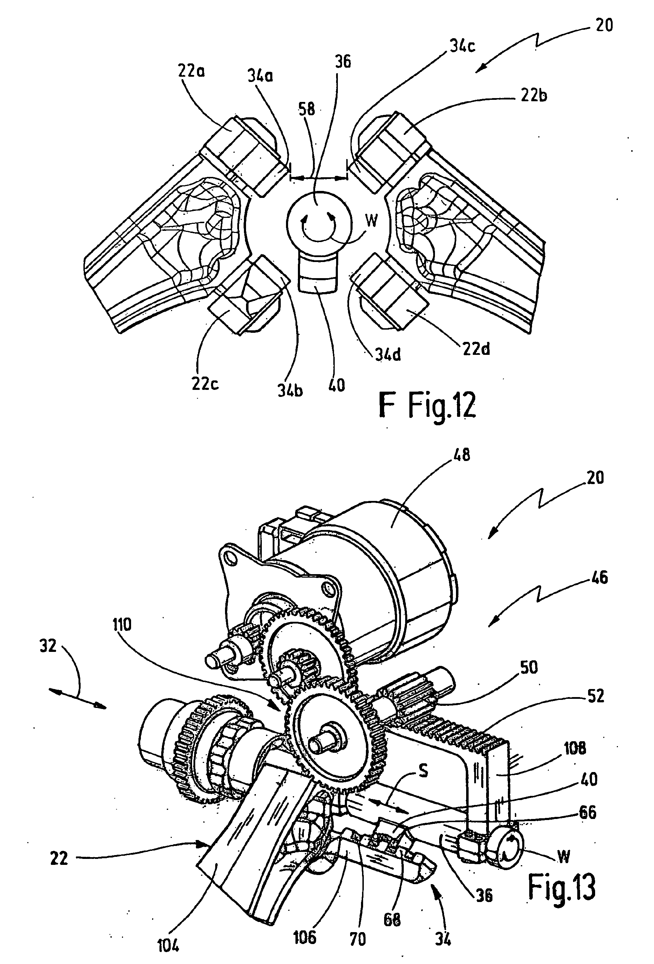

Wie es in Fig. 12 gezeigt ist, sind die Mitnehmereinrichtungen 34 bevorzugt gleichmäßig um den Umfang der Schaltwelle 36 herum verteilt angeordnet. Die Mitnehmereinrichtungen 34 sind dabei in Umfangsrichtung voneinander durch einen Umfangszwischenraum 58 beabstandet, dessen generelle Funktion dem Umfangszwischenraum 58 der Fig. 2, 4 entspricht. Insbesondere ist die Koppeleinrichtung 40 schmaler ausgebildet als der Umfangszwischenraum 58, so dass die Koppeleinrichtung 40 zwischen zwei Mitnehmereinrichtungen (Mitnehmereinrichtungen 34b, 34d in Fig. 12) axial frei bewegbar ist.

In Fig. 13 ist gezeigt, dass der Linearantrieb 46 ein Stegbauteil 108 aufweist, das sich brückenartig über die Koppeleinrichtung 40 erstreckt. Die Schaltwelle 36 ist an Brückenpfeilern des Stegbauteils 108 drehbar gelagert. Ferner ist das Stegbauteil 108 in Axialrichtung mit der Schaltwelle 36 gekoppelt.

Radial außen weist das Stegbauteil 108 einen Zahnstangenabschnitt 52 auf, an dem ein Ritzel 50 angreift. Das Ritzel 50 ist über ein Linearantriebgetriebe 110 mit einer Ausgangswelle des elektrischen Motors 48 des Linearantriebs 46 gekoppelt.

In Fig. 13 ist ferner beispielhaft eine Mitnehmereinrichtung 34 dargestellt, die an einem Axialsteg 106 ausgebildet ist. Der Axialsteg 106 ist starr mit dem Armbauteil 104 des Schaltgliedes (der Schaltgabel) 22 verbunden.

Der Axialsteg 106 weist auf der radial zu der Schaltwelle 36 hinweisenden Seite eine Mehrzahl von axial beabstanden Nasen 68 auf, zwischen denen Nuten 70 ausgebildet sind. Die Nasen 66 der Koppeleinrichtung greifen, wie es in Fig. 13 gezeigt ist, bei entsprechender Drehstellung der Schaltwelle 36 in die Nuten 70 des Axialstegs 106, so dass die Schaltgabel 22 axial mit der Schaltwelle 36 gekoppelt ist.

Die Axialstege 106 der Schaltgabeln 22 sind axial miteinander ausgerichtet und um die Schaltwelle 36 herum vorgesehen, derart, dass die Koppeleinrichtung 40 je nach Drehstellung mit einer der Mitnehmereinrichtungen 34 der Schaltgabeln 22 in Eingriff gelangen kann.

## Patentansprüche

1. Schaltanordnung (20) für ein Kraftfahrzeuggetriebe (10), das eine Mehrzahl von Gangstufen (1-7, R) aufweist, mit einer in einer Axialrichtung (32) ausgerichteten Schaltwelle (36) und einer Mehrzahl von Schaltgliedern (22), die dazu ausgelegt sind, an Schaltmuffen (18) anzugreifen, die zum Schalten der Gangstufen (1-7, R) axial versetzbar sind, wobei die Schaltwelle (36) zum Anwählen von jeweils einer der Schaltmuffen (18) verdrehbar und zum Schalten der Gangstufen (1-7, R) axial versetzbar gelagert ist, wobei die Schaltglieder (22) jeweils eine Mitnehmereinrichtung (34) zur Kopplung mit der Schaltwelle (36) aufweisen, wobei die Schaltwelle (36) eine Koppelanordnung (38) aufweist, die dazu ausgelegt ist, je nach Drehstellung der Schaltwelle (36) jeweils mit einer Mitnehmereinrichtung (34) von einem der Schaltglieder (22) in Eingriff zu treten, um jenes Schaltglied (22) axial mit der Schaltwelle (36) zu koppeln, wobei die Mitnehmereinrichtungen (34) jeweils eine Mehrzahl von wenigstens drei Nasen (68) aufweisen, die in axialer Richtung ausgerichtet sind und es ermöglichen, das zugeordnete Schaltglied (22) und die Schaltwelle (36) in einer Mehrzahl von axialen Relativpositionen miteinander zu koppeln, wobei die Koppelanordnung (38) eine Koppeleinrichtung (40) aufweist, um die in Umfangsrichtung der Schaltwelle (36) herum wenigstens zwei Mitnehmereinrichtungen (34) verteilt angeordnet sind, **dadurch gekennzeichnet, dass** die Mitnehmereinrichtungen (34) gleichmäßig um den Umfang der Schaltwelle (36) herum verteilt angeordnet sind.

2. Schaltanordnung nach Anspruch 1, **dadurch gekennzeichnet, dass** zwischen wenigstens zwei der Mitnehmereinrichtungen (34) ein Umfangszwischenraum (58) eingerichtet ist.

3. Schaltanordnung nach einem der Ansprüche 1 - 2, **dadurch gekennzeichnet, dass** wenigstens zwei Schaltglieder (22) auf axial gegenüberliegenden Seiten der einen Koppeleinrichtung (40) angeordnet sind.

4. Schaltanordnung nach einem der Ansprüche 1 - 3, **dadurch gekennzeichnet, dass** die Mitnehmereinrichtungen (34) an Axialstegen (106) ausgebildet sind, die sich in axialer Richtung von den Schaltgliedern (22) erstrecken.

5. Schaltanordnung nach einem der Ansprüche 1 - 4, **dadurch gekennzeichnet, dass** ein Zahnstangenabschnitt (52) zum axialen Versetzen der Schaltwelle (36) an einem Stegabschnitt (108) ausgebildet ist, der axial mit der Koppeleinrichtung (40) ausgerichtet ist.

6. Schaltanordnung nach einem der Ansprüche 1 - 5, **dadurch gekennzeichnet, dass** die Schaltglieder (22) jeweils einen Lagerabschnitt (29) aufweisen, mittels dessen die Schaltglieder (22) jeweils in axialer Richtung beweglich lagerbar sind, und wobei die Lagerabschnitte (29) von wenigstens zwei Schaltgliedern (22) an einer gemeinsamen Lagerwelle (30; 30A, 30B) axial versetzt zueinander gelagert sind.

7. Schaltanordnung nach Anspruch 6, **dadurch gekennzeichnet, dass** die Schaltglieder (22) an der Lagerwelle (30; 30A; 30B) in axialer Richtung frei beweglich gelagert sind.

8. Schaltanordnung nach Anspruch 5 oder 6, **dadurch gekennzeichnet, dass** die Schaltwelle (36) und die Lagerwelle (30; 30A; 30B) an wenigstens einem ihrer Enden an einem gemeinsamen Lagerbauteil (54, 56) gelagert sind.

9. Schaltanordnung nach einem der Ansprüche 1 bis 8, **dadurch gekennzeichnet, dass** wenigstens einem der Schaltglieder (22) eine Verriegelungseinrichtung (95) zugeordnet ist, die dazu ausgelegt ist, jenes Schaltglied (22) in axialer Richtung in Abhängigkeit von der Drehstellung der Schaltwelle (36) gegen ein Gehäuse (96) des Kraftfahrzeuggetriebes (10) zu verriegeln.

10. Schaltanordnung nach Anspruch 6, **dadurch gekennzeichnet, dass** die Schaltwelle (36) die Lagerwelle (30) bildet, wobei die dem Schaltglied (22) zugeordnete Koppeleinrichtung (40) eine Vertiefung (90) in der Schaltwelle (36) ist und wobei die Mitnehmereinrichtung (34) des Schaltgliedes (22) einen an dem Schaltglied (22) in radialer Richtung beweglichen Stift (92) aufweist, der zur axialen Kopplung in die Vertiefung (90) eingreift und in anderen Drehstellungen der Schaltwelle (36) radial nach außen versetzt ist.

11. Schaltanordnung nach Anspruch 9 und 10, **dadurch gekennzeichnet, dass** der Stift (92) in den anderen Drehstellungen der Schaltwelle (36) in eine jeweilige Verriegelungsvertiefung (98) des Gehäuses (96) eingreift.

## Claims

1. Shift arrangement (20) for a motor vehicle transmission (10) which comprises a plurality of gear stages (1-7, R), comprising a shift shaft (36) aligned in an axial direction (32), and a plurality of shift members (22) which are adapted to engage on shift sleeves (18) that are axially displaceable for shifting the gear stages (1-7, R), wherein the shift shaft (36) is supported so as to be rotatable for selecting a respective one of the shift sleeves (18) and is axially displaceable for shifting the gear stages (1-7, R), wherein each of the shift members (22) comprises a catch device (34) for coupling with the shift shaft (36), wherein the shift shaft (36) comprises a coupling arrangement (38) which is adapted to engage with a respective catch device (34) of one of the shift members (22), depending on the rotational position of the shift shaft (36), in order to couple this shift member (22) axially with the shift shaft (36), wherein the catch devices (34) each comprise a plurality of at least three noses (68) that are aligned in the axial direction and which allow to couple the associated shift member (22) and the shift shaft (36) in a plurality of axially relative positions with each other, wherein the coupling arrangement (38) comprises a coupling device (40), wherein at least two catch devices (34) are arranged distributed around the coupling device (40) in the peripheral direction of the shift shaft (36), **characterized in that** the catch devices (34) are arranged evenly distributed around the periphery of the shift shaft (36).

2. Shift arrangement according to claim 1, **characterized in that** a peripheral intermediate space (58) is arranged between at least two of the catch devices (34).

3. Shift arrangement according to one of claims 1 to 2, **characterized in that** at least two shift members (22) are arranged on axially opposed sides of the one coupling device (40).

4. Shift arrangement according to one of claims 1 to 3, **characterized in that** the catch devices (34) are arranged on axial bars (106) which extend in the axial direction from the shift members (22).

5. Shift arrangement according to one of claims 1 to 4, **characterized in that** a rack portion (52) is formed on a bar portion (158) which is aligned axially with the coupling device (40), which rack portion (52) serves for axially displacing the shift shaft (36).

6. Shift arrangement according to one of claims 1 to 5, **characterized in that** the shift members (22) each comprise a support portion (29) by means of which the shift members (22) are each movably supportable in the axial direction, and wherein the support portions (29) of at least two shift members (22) are supported on a common support shaft (30; 30A, 30B) so as to be axially displaced from each other.

7. Shift arrangement according to claim 6, **characterized in that** the shift members (22) are freely movable in the axial direction on the support shaft (30; 30A, 30B).

8. Shift arrangement according to claim 5 or 6, **characterized in that** the shift shaft (36) and the support shaft (30; 30A, 30B) are supported on at least one of their ends at a common support structural member (54, 56).

9. Shift arrangement according to one of claims 1 to 8, **characterized in that** a locking device (95) is assigned to at least one of the shift members (22), said locking device being adapted to lock the shift member (22) against a housing (96) of the motor vehicle transmission (10) in the axial direction in dependence on the rotational position of the shift shaft (36).

10. Shift arrangement according to claim 6, **characterized in that** the shift shaft (36) forms the support shaft (30), wherein the coupling device (40) assigned to the shift member (22) is a depression (90) in the shift shaft (36), and wherein the catch device (34) of the shift member (22) comprises a pin (92) on the shift member (22), said pin being movable in a radial direction, wherein the pin engages into the depression (90) so as to achieve an axial coupling, and is radially displaced to the outside in other rotational positions of the shift shaft (36).

11. Shift arrangement according to claim 9 and 10, **characterized in that** the pin (92) engages in the other rotational positions of the shift shaft (36) in a respective locking depression (98) of the housing (96).

## Revendications

1. Ensemble de changement de vitesse (20) pour une transmission de véhicule automobile (10) qui comprend une pluralité de rapports de vitesse (1-7, R), comportant un arbre de changement de vitesse (36) orienté dans une direction axiale (32) et une pluralité d'éléments de changement de vitesse (22) qui sont conçus pour s'engager avec des douilles de changement de vitesse (18) qui peuvent être décalées axialement pour le changement des rapports de vitesse (1-7, R), l'arbre de changement de vitesse (36) étant monté rotatif pour la sélection de l'une des douilles de changement de vitesse (18) respectives, et étant monté de manière à pouvoir être décalé axialement pour le changement des rapports de vitesse (1-7, R), les éléments de changement de vitesse (22) comprenant un dispositif d'entraînement (34) respectif pour l'accouplement à l'arbre de changement de vitesse (36), l'arbre de changement de vitesse (36) comprenant un ensemble d'accouplement (38) qui est conçu pour entrer en prise avec un dispositif d'entraînement (34) respectif de l'un des éléments de changement de vitesse (22) en fonction de la position angulaire de l'arbre de changement de vitesse (36), afin d'accoupler axialement cet élément de changement de vitesse (22) à l'arbre de changement de vitesse (36), les dispositifs d'entraînement (34) comprenant respectivement une pluralité d'au moins trois ergots (68) qui sont alignés dans la direction axiale et permettent d'accoupler l'un à l'autre l'élément de changement de vitesse associé (22) et l'arbre de changement de vitesse (36) dans une pluralité de positions relatives axiales, l'ensemble d'accouplement (38) comprenant un dispositif d'accouplement (40) autour duquel, dans la direction périphérique de l'arbre de changement de vitesse (36), sont disposés de manière répartie au moins deux dispositifs d'entraînement (34), **caractérisé en ce que** les dispositifs d'entraînement (34) sont disposés de manière régulière autour de la périphérie de l'arbre de changement de vitesse (36).

2. Ensemble de changement de vitesse selon la revendication 1, **caractérisé en ce qu'**un espace intermédiaire libre (58) est configuré entre au moins deux des dispositifs d'entraînement (34).

3. Ensemble de changement de vitesse selon l'une quelconque des revendications 1 et 2, **caractérisé en ce qu'**au moins deux éléments de changement de vitesse (22) sont disposés sur des côtés opposés axialement du dispositif d'accouplement (40).

4. Ensemble de changement de vitesse selon l'une quelconque des revendications 1 à 3, **caractérisé en ce que** les dispositifs d'entraînement (34) sont réalisés sur des nervures axiales (106) qui s'étendent à partir des éléments de changement de vitesse (22) dans la direction axiale.

5. Ensemble de changement de vitesse selon l'une quelconque des revendications 1 à 4, **caractérisé en ce qu'**un tronçon de crémaillère (52) est réalisé sur un tronçon de nervure (108) qui est aligné axialement avec le dispositif d'accouplement (40) pour le décalage axial de l'arbre de changement de vitesse (36).

6. Ensemble de changement de vitesse selon l'une quelconque des revendications 1 à 5, **caractérisé en ce que** les éléments de changement de vitesse (22) comprennent un tronçon de palier (29) respectif, au moyen duquel les éléments de changement de vitesse (22) peuvent être respectivement montés de manière mobile dans la direction axiale, et les tronçons de palier (29) d'au moins deux éléments de changement de vitesse (22) étant montés de manière décalée axialement les uns par rapport aux autres sur un arbre de palier (30 ; 30A, 30B) commun.

7. Ensemble de changement de vitesse selon la revendication 6, **caractérisé en ce que** les éléments de changement de vitesse (22) sont montés de manière librement mobile dans la direction axiale sur l'arbre de palier (30 ; 30A, 30B).

8. Ensemble de changement de vitesse selon la revendication 5 ou 6, **caractérisé en ce que** l'arbre de changement de vitesse (36) et l'arbre de palier (30 ; 30A, 30B) sont montés sur une partie structurale de palier (54, 56) commune au niveau d'au moins l'une de leurs extrémités.

9. Ensemble de changement de vitesse selon l'une quelconque des revendications 1 à 8, **caractérisé en ce qu'**un dispositif de blocage (95) est associé à au moins l'un des éléments de changement de vitesse (22), lequel dispositif de blocage est conçu pour bloquer, dans la direction axiale, cet élément de changement de vitesse (22) contre un boîtier (96) de la transmission de véhicule automobile (10), en fonction de la position angulaire de l'arbre de changement de vitesse (36).

10. Ensemble de changement de vitesse selon la revendication 6, **caractérisé en ce que** l'arbre de changement de vitesse (36) forme l'arbre de palier (30), le dispositif d'accouplement (40) associé à l'élément de changement de vitesse (22) étant un évidement (90) dans l'arbre de changement de vitesse (36), et le dispositif d'entraînement (34) de l'élément de changement de vitesse (22) comprenant une cheville (92) mobile dans la direction radiale sur l'élément de changement de vitesse (22), laquelle cheville vient en prise dans l'évidement (90) pour l'accouplement axial, et est décalée radialement vers l'extérieur dans les autres positions angulaires de l'arbre de changement de vitesse (36).

11. Ensemble de changement de vitesse selon la revendication 9 ou 10, **caractérisé en ce que** la cheville (92) vient en prise dans un évidement de blocage (98) respectif du boîtier (96) dans les autres positions angulaires de l'arbre de changement de vitesse (36).
